(19) Europäisches Patentamt
European Patent Office
Office européen des brevets

(11) Publication number: **0 010 840**
**B1**

# (12) EUROPEAN PATENT SPECIFICATION

(45) Date of publication of patent specification: **04.12.85**

(51) Int. Cl.$^4$: **C 08 G 63/64**

(21) Application number: **79301715.3**

(22) Date of filing: **20.08.79**

## (54) Aromatic polyester-polycarbonate and a process for the production thereof.

(30) Priority: **22.09.78 JP 117232/78**

(43) Date of publication of application:
**14.05.80 Bulletin 80/10**

(45) Publication of the grant of the patent:
**04.12.85 Bulletin 85/49**

(84) Designated Contracting States:
**DE FR GB IT NL**

(56) References cited:
**BE-A- 653 590**
**DE-A-1 495 302**
**DE-A-2 714 544**
**US-A-2 999 846**
**US-A-3 148 172**
**US-A-3 399 170**
**US-A-3 780 148**

**JOURNAL OF POLYMER SCIENCE, Vol. 54, 1961, Easton, R.E. WILFONG "Linear Polyesters", pages 385 to 410**
**Kunststoff-Handbuch, Vol. VIII, "Polyester", 1973, CARL HANSER VERLAG, München, page 702**

**Encyclopedia of polymer science and technology, Vol. 11, 1973, INTERSCIENCE PUBLISHERS, New York, page 78**

(73) Proprietor: **MITSUBISHI CHEMICAL INDUSTRIES LIMITED**
**5-2, Marunouchi 2-chome Chiyoda-ku**
**Tokyo 100 (JP)**

(72) Inventor: **Hajime, Mori**
**3-262, Nishimagari-machi, Yahatanishi-ku**
**Kitakyushu-shi, Fukuoka (JP)**
Inventor: **Katsuhisa, Kohyama**
**12-27-405, Tsutsui-machi, Yahatanishi-ku**
**Kitakyushu-shi, Fukuoka (JP)**
Inventor: **Katsuhiko, Nakamura**
**1403-70, Aza-haranoshita, Oaza-babayama**
**Yahatanishi-ku Kitakyushu-shi, Fukuoaka (JP)**
Inventor: **Katsuyuki, Sakata**
**287-206, Asa-sasao, Oaza-nakama**
**Nakama-shi, Fukuoka (JP)**

(74) Representative: **Baillie, Iain Cameron et al**
**c/o Ladas & Parry Isartorplatz 5**
**D-8000 München 2 (DE)**

**EP 0 010 840 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to aromatic polyester-polycarbonate resins. More particularly, the present invention relates to aromatic polyester-polycarbonate resins which have excellent mechanical properties, thermal stability, chemical resistance and transparency and which are suitable for the fabrication of articles by melt molding.

In the preparation of prior art aromatic polyester-polycarbonates, one resin which has been suggested is a copolymer which is produced by the reaction of 2,2-bis-(4-hydroxyphenyl)-propane-(bis-phenol A) with terephthaloyl chloride and phosgene. The copolymer has a bis-phenol A residue:terephthalic acid residue:carbonate moiety constituent mole ratio in the range of 2:0.8—1.3:1.2—0.7 and a glass transition point (Tg) in the range of from 170—194°C. (Japanese Patent Laid-Open Publication No. 128992/1977). Because of its high softening point and high melt viscosity, however, the polyester-polycarbonate product has not proved to have satisfactory moldability characteristics. When it is to be injection molded into a shaped article, for example, it must be molded at high temperature, metal-die temperature and injection pressure. The use of high temperatures has the disadvantage that thermal deterioration of the resin occurs. Moreover, the use of high injection pressure is disadvantageous because it distorts the shaped product. Still further, the use of elevated temperature and pressure increases the cost of preparation. Under these circumstances, a need has long been felt for polyester-polycarbonates of improved moldability.

According to the invention there is provided an aromatic polyester-polycarbonate resin having a glass transition point in the range of 160° to 190°C, composed of repeating units of the structures I, II and III as follows:

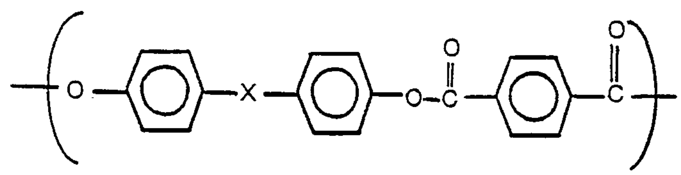

I

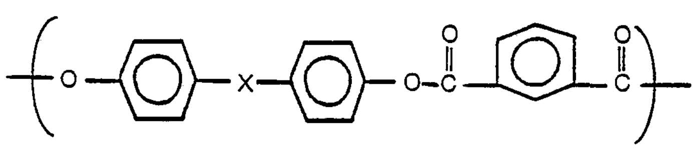

II

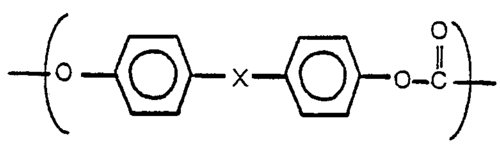

III

wherein X is a divalent group and each divalent aromatic entity in each of the structures 1, 11 and 111 may be substituted by a hydrocarbon residue and wherein the molar proportion of dihydroxy-diaryl residue to benzene dicarboxylic acid residue to carbonate moiety ranges from 1:0.33—0.75:0.67—0.25 and the molar ratio of terephthalic acid residue to isophthalic acid residue in the benzene dicarboxylic acid residue ranges from 9:1 to 1:4.

The resin product of the invention can have an intrinsic viscosity at 20°C of 0.4 to 1.5.

Thus an aromatic polyester-polycarbonate of improved moldability produced by reacting a combination of a terephthaloyl chloride compound and a specific proportion of an isophthaloyl chloride compound with bis-phenol A and phosgene possesses a low melting point and low melt viscosity and exhibits substantially improved moldability in comparison to an aromatic polyester-polycarbonate produced by reacting a single terephthaloyl chloride with bis-phenol A and phosgene. Moreover, the mixed isophthaloyl and terephthaloyl containing product has substantially the same mechanical, thermal stability, chemical resistance and transparency properties as the known polyester-polycarbonate resins.

The aromatic polyester-polycarbonate of the present invention can be produced by interfacial polymerization or solution polymerization, using as the starting materials, a dihydroxy-diaryl compound of the formula:

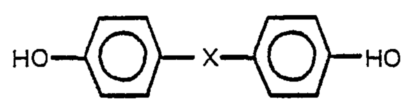

(IV)

wherein X is a divalent group such as CRR, C=R′, —O—, —S—, —SO— or —$SO_2$—, and R is either a hydrogen atom or a monovalent hydrocarbon group and R′ is a divalent hydrocarbon group, and a mixture of a terephthaloyl chloride and an isophthaloyl chloride and phosgene.

Examples of suitable dihydroxy-diaryl compounds include bis-(hydroxy-aryl)-alkanes such as bis-(4-hydroxyphenyl)-methane, 1,1-bis-(4-hydroxyphenyl)-ethane, 2,2-bis-(4-hydroxyphenyl)-propane, 2,2-bis-(4-hydroxyphenyl)-butane, 2,2-bis-(4-hydroxyphenyl)-octane, 2,2-bis-(4-hydroxy-3-methylphenyl)-propane, 1,1-bis-(4-hydroxy-3-tert. butylphenyl)-propane; bis-(hydroxyaryl)-cyclo-alkanes such as 1,1-bis-(4-hydroxyphenyl)-cyclo-pentane and 1,1-bis-(4-hydroxyphenyl)-cyclo-hexane; bis-(hydroxy-aryl)-aryl-alkanes such as bis-(4-hydroxyphenyl)-phenyl-methan and bis-(4-hydroxyphenyl)-phenylethane, dihydroxy-diaryl ethers such as 4,4'-dihydroxy-diphenyl ether and 4,4'-dihydroxy-3,3'-dimethyldiphenyl ether; dihydroxy-diaryl sulfides such as 4,4'-dihydroxy-diphenyl sulfide and 4,4'-dihydroxyl-3,3'-dimethyldiphenyl sulfide; dihydroxydiaryl sufloxides such as 4,4'-dihydroxydiphenyl sulfoxide and 4,4'-dihydroxy-3,3'-dimenthyldiphenyl sulfoxide; and dihydroxy-diaryl sulfones such as 4,4'-dihydroxydiphenyl sulfone and 4,4'-dihydroxy-3,3'-dimethyldiphenyl sulfone.

Examples of suitable terephthaloyl chloride compounds in addition to terephthaloyl chloride itself within the scope of the invention include those which contain a monovalent hydrocarbon substituent on a ring such as methyl terephthaloyl chloride and 2,5-dimethyl terephthaloyl chloride.

Examples of suitable isophthaloyl chloride compounds in addition to isophthaloyl chloride itself within the scope of the invention include those which contain a halogen atom or a monovalent hydrocarbon substituent on the ring such as 2-methyl isophthaloyl chloride.

In the technique of the present invention, mixtures of a terephthaloyl chloride compound and an isophthaloyl chloride compound are used in varying amounts. Hereinafter, such mixtures are referred to briefly as a "mixed phthaloyl chloride."

The aromatic polyester-polycarbonate product of the present invention contains, as benzene dicarboxylic acid residues, both a terephthalic acid residue and an isophthalic acid residue. The mole ratio of terephthalic acid residue to isophthalic acid residue is desirably within the range of 9:1 to 2:8, preferably 8:2 to 3:7. The value of the mole ratio of the terephthalic acid residue to the isophthalic acid residue is determined by hydrolyzing the resin in boiling alkali methanol and subjecting the hydrolyzate to analysis by high-speed liquid chromatography.

In the preparation of the present product, when the proportion of the isophthalic acid residue in the aromatic polyester-polycarbonate product is less than the indicated preferred mole ratio, the moldability of the aromatic polyester-polycarbonate is generally not improved sufficiently. When the value of the ratio is greater than the preferred specific upper limit, the mechanical properties such as tensile strength, bending strength, impact strength, creep resistance, and physical properties such as solvent resistance, boiling water resistance of the aromatic polyester-polycarbonate are generally less than normally required. Thus, the mixing ratio of the two phthaloyl chloride compounds should be selected with suitable consideration given to the balance which is desired to be maintained between the moldability (fluidity) and the mechanical and physical properties of the polyester-polycarbonate product synthesized.

The amounts of dihydroxy-diaryl compound, mixed phthaloyl chloride and phosgene employed in the reaction are generally those which provide a product having a dihydroxy-diaryl compound residue:benzene-dicarboxylic acid residue:carbonate moiety mole ratio within the range of 1:0.33—0.75:0.67—0.25, preferably 1:0.33—0.49:0.67—0.51. When the proportion of the benzene-dicarboxlyic acid residue in the product is less than the indicated mole ratio amount, usually insufficient improvement is obtained in the glass transition point of the product. When the proportion of the carbonate moiety in the product is less than the indicated mole ratio amount, the properties inherently possessed by the polycarbonate product tend to be inferior. It should be noted that the mole ratio of the various constituents of the composition can be determined on the basis of the ratio of peaks, i.e., 1,740 $cm^{-1}$ for the —COO— group and 1,770 $cm^{-1}$ for the —OCOO— group, found in the infrared spectrum of the product.

In the case of the aromatic polyester-polycarbonate of the present invention, the intrinsic viscosity [η] which can be determined from the formula:

$$\eta sp/c = [\eta] + 0.427\,[\eta]^2\,C,$$

should fall within the range of from 0.4 to 1.5, preferably from 0.45 to 1.1. The intrinsic viscosity is determined by placing the polyester-polycarbonate product in methylene chloride at a concentration of 0.6 g/dl and obtaining a measurement at 20°C. If the value of [η] is too large, the moldability of the product is inferior. Conversely if the value is too small, the mechanical properties of the product are not sufficient.

The glass transition point (Tg) of the aromatic polyester-polycarbonate of the present invention is determined by scanning differential thermal analysis and it should be within the range of from 160 to 190°C, preferably from 170 to 185°C. Further, the aromatic polyester-polycarbonate product should have a terminal carboxyl group content of not more than 10 μ equivalent/g of resin.

The aromatic polyester-polycarbonate of the present invention can be manufactured by various methods. For example, in the solution polymerization method the resin can be formed by reacting a dihydroxy-diaryl compound with a mixed phthaloyl chloride in an organic solvent using pyridine or some other similar compound as an acid acceptor to produce a low molecular polyester oligomer having terminal OH groups. Thereafter, the oligomer is reacted with phosgene to induce polycondensation. In the interfacial polymerization method the resin product can be formed by first mixing, for esterification, an aqueous alkaline solution of the above dihydroxy-diaryl compound with a solution of the mixed phthaloyl

chloride in an organic solvent to produce a low molecular polyester oligomer having terminal —OH groups. Thereafter, the oligomer is reacted with phosgene to convert the terminal —OH groups into —OCOCl groups and then the oligomer in an organic solvent is reacted with a dihydroxy-diaryl compound in an aqueous alkaline solution.

As described above, the aromatic polyester-polycarbonate of the present invention possesses a high glass transition point and a low terminal carboxyl group content of less than 10 μ equivalent/g of resin, and excells in a number of characteristics which include mechanical properties, thermal stability, chemical resistance and transparency. Moreover, the produce exhibits notably improved moldability and low melt viscosity. For these reasons, the product of the present invention is very useful from a commercial point of view.

Having generally described the invention, a more complete understanding can be obtained by reference to certain specific examples, which are included for purposes of illustration only and are not intended to be limiting unless otherwise specified.

The values of [η], Tg, the mole ratio of the constituents of the resin composition and the mole ratio of terephthaloyl chloride to isophthaloyl chloride which are indicated in the following working examples are those determined by the methods described above. For purposes of brevity, terephthaloyl chloride and isophthaloyl chloride are respectively expressed as TPC and IPC.

## Example 1

A solution of 2.5 kg of TPC and 2.5 kg of IPC dissolved in 95 kg of methylene chloride, an aqueous alkaline solution of bis-phenol A containing 6 kg of bis-phenol A and 6 g of triethylamine dissolved in 40 liters of a 5% (weight) sodium hydroxide solution were prepared.

Into a stainless steel tube with a 4 mm inside diameter and 20 m in length, were fed the methylene chloride solution containing TPC and IPC and the aqueous alkaline solution of bis-phenol A at respective flow rates of 24.4 kg/hr and 16.1 kg/hr. The stainless steel tube was wound in the shape of a coil and was cooled in a water tank. Into this tube, was fed phosgene at a flow rate of 0.6 kg/hr through a tube having an inside diameter of 3 mm and attached to the reactor tube at a distance of 8 m from the inlet of the stainless steel tube. When the reaction solution flowing from the outlet of the tube was placed in the receptacle, it immediately separated into two phases. After the reaction continued for about one hour, about 1 litre of the reaction solution was collected. This solution immediately separated into two phases. While a 250-ml portion of the methylene chloride phase containing the oligomer and 0.25 g of p-tert-butyl phenol were vigorously stirred in a 1-litre flask, a solution obtained by dissolving 40 g of bis-phenol A in 500 g of an aqueous 3% sodium hydroxide solution of 0.05 g of the triethylamine were added thereto and the mixture was allowed to undergo polycondensation for one hour. The reaction temperature was in the range of from 26 to 30°C. The resultant reaction solution was left to stand, and upon standing, separated into two phases. Then, the methylene chloride phase containing the polymer was washed with water, washed with an acid and then washed again with water in the order mentioned. Then the washed phase was freed from methylene chloride by evaporation and dried to afford a white solid resin.

This resin was found to have an intrinsic viscosity [η] of 0.76 and a glass transition point (Tg) of 180°C. The constituents of the product were present in a mole ratio of bis-phenol A residue to sum of terephthalic acid residue and isophthalic acid residue (benzene dicarboxylic acid residue) to carbonate moiety of 1:0.58:0.42. The terephthalic acid residue:isophthalic acid residue mole ratio in the product was 5:5. The resin's terminal carboxlyic acid group content was 0.3 μ equivalent/g of resin.

## Example 2

A 5% (by weight) solution prepared by dissolving an equivalent weight mixture of TPC and IPC in methylene chloride and an aqueous alkaline solution of bis-phenol A prepared by dissolving 15 parts (by weight) of bis-phenol A and 0.05 part of triethylamine in 100 parts of an aqueous 5% sodium hydroxide solution were fed to the same reaction tube as used in Example 1 at feed rates of 33.5 kg/hr and 21.6 kg/hr, respectively. Phosgene was fed into the reaction tube through the inlet disposed along the middle of the length of the tube at a feed rate of 1.08 kg/hr.

The reaction solution flowing from the outlet of the tube was introduced into a 10-litre settler and it continuously separated into a water phase and a methylene chloride phase.

The separated methylene chloride phase was fed to a 50-litre buffled agitator (first polymerization column) provided with an overflow type discharge pipe and, at the same time, a solution prepared by dissolving 35 parts of bis-phenol A in 600 parts of an aqueous 2.5% sodium hydroxide solution and a solution of 6% p-tertiary butyl phenol in methylene chloride were fed thereto at feed rates of 60 kg/hr and 0.5 kg/hr respectively to induce polycondensation. The reaction solution which flowed from the overflow tube was introduced into a second polymerization column having the same specifications as the first polymerization column, for completion of the polycondensation reaction.

The reaction solution flowing from the overflow tube of the second polymerization column was transferred into a 10-litre settler, where the solution separated into a water phase and a methylene chloride phase. In combination of a 15-litre agitation tank provided with an overflow type discharge tube and a 10-litre settler, the methylene chloride phase was washed with water, washed with hydrochloric acid and

washed again with water. The weight of the washing liquid used in each washing was two times that of the methylene chloride solution.

The methylene chloride phase which had undergone the last round of washing was fed into a kneader heated to 130°C by means of a steam jacket, wherein the solution was freed from methylene chloride by evaporation and flakes of a resin material were obtained. This resin was dried for 8 hours in a batch-type vacuum drier operated at 140°C and a pressure of 10 Torr ($1.369 \times 10^{-2}$ kg/cm$^2$).

The dry flakes of resin thus obtained were extruded into chips through a vent-type extruder 40 mm in diameter at an extrusion temperature of 300°C. By analysis, the flakes were found to possess an intrinsic viscosity [η] of 0.63 and a glass transition point (Tg) of 177°C. The bis-phenol A residue:sum of terephthalic acid residue and isophthalic acid residue (benzene dicarboxylic acid residue):carbonate moiety bond molar ratio was found to be 1:0.45:0.55 and the terephthalic acid residue:isophthalic acid residue molar ratio was found to be 5:5. The terminal carboxyl group content was found to be 0.8 μ equivalent/g of resin.

When the chips were injection molded through a 3.5-ounce (99.22 g) injection molder at a resin temperature of 350°C, an injection pressure of 80—90 kg/cm$^2$ (by gauge) and die temperature of 145°C and the molded product was tested on a metal die specified by ASTM for the molding of test pieces used for determination of physical properties, there was obtained a molded article of high quality.

Examples 3—10

Several TPC—IPC mixtures of varying TPC/IPC ratios shown in the following table were treated by the procedure of Example I to yield white resin samples. The white resins so prepared were analyzed. The results of the analysis are shown in Table 1.

TABLE 1

| Example No. | 3 | 4 | 5 | 6 | 7 | 8 | 9 | 10 |
|---|---|---|---|---|---|---|---|---|
| TPC/IPC (molar ratio) | 9.5/0.5 | 9/1 | 8/2 | 7/3 | 6/4 | 3/7 | 2/8 | 1/9 |
| Intrinsic Viscosity [η] | 0.76 | 0.75 | 0.74 | 0.77 | 0.75 | 0.75 | 0.76 | 0.74 |
| Glass transition point (Tg) (°C) | 184 | 183 | 181 | 180 | 178 | 175 | 174 | 174 |
| Bis-phenol A residue: terephthalic acid residue + isophthalic acid residue: carbonate moiety (molar ratio) | 1:0.57 :0.43 | 1:0.57 :0.43 | 1:0.55 :0.45 | 1:0.56 :0.44 | 1:0.58 :0.42 | 1:0.55 :0.45 | 1:0.55 :0.45 | 1:0.56 :0.44 |
| Terminal Carboxyl group content (μ equivalent/g of resin) | 0.4 | 0.3 | 0.4 | 0.2 | 0.2 | 0.3 | 0.3 | 0.2 |
| Injection pressure at 350°C ($kg/cm^2$-gauge) | 110—120 | 90—100 | 80—90 | 80—90 | 80—90 | 80—90 | 75—90 | 70—80 |

Comparative Example 1

The procedure of Example 2 was faithfully repeated, with the exception that terephthalolyl chloride alone was used in place of the TPC/IPC mixture, to produce flakes of dry resin, which were subsequently converted into chips.

By analysis, the chips of resin were found to have an intrinsic viscosity [η] of 0.52 and a glass transition point (Tg) of 184°C. The bis-phenol A residue:terephthalic acid residue:carbonate moiety molar ratio was 1:0.46:0.54.

When the chips of resin were subjected to molding by the procedure of Example 2, the resin suffered from the phenomenon of short shot because of its poor flowability. For the resin to produce an article of good shape, the injection molding had to be conducted with the resin temperature elevated to 385°C and an injection pressure of 100 kg/cm$^2$. In this instance, the shaped article sustained local burning because of the excessively high resin temperature.

**Claims**

1. An aromatic polyester-polycarbonate resin having a glass transition point in the range of 160° to 190°C containing residues of dihydroxy-diaryl compound, isophthalic acid, terephthalic acid and carbonate characterised in that it comprises: a polymer material composed of the repeating units of each of structures I, II and III

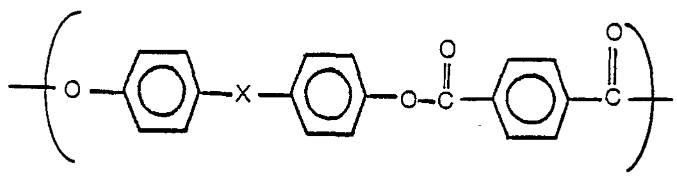

I

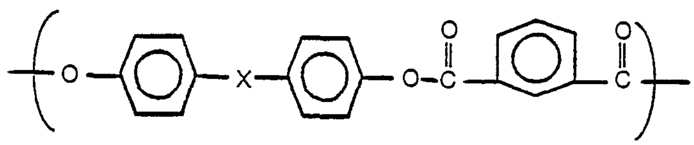

II

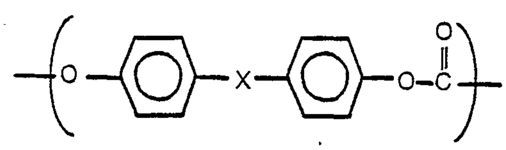

III

wherein X is a divalent group and each divalent aromatic entity may be substituted by hydrocarbon residue and wherein the molar proportion of dihydroxy-diaryl residue to benzene dicarboxlyic acid residue to carbonate moiety ranges from 1:0.33—0.75:0.67—0.25 and the molar ratio of terephthalic acid residue to isophthalic acid residue in the benzene dicarboxylic acid residue ranges from 9:1 to 1:4.

2. A resin according to claim 1, wherein said molar proportion ranges from 1:0.33—0.49:0.67—0.51.

3. A resin according to either of claims 1 and 2, wherein said molar ratio ranges from 4:1 to 3:7.

4. A resin according to any one of claims 1 to 3, wherein said resin has an intrinsic viscosity ranging from 0.4 to 1.5 at 20°C.

5. A resin according to any one of claims 1 to 4, wherein the dihydroxy-diaryl residue is derived from a bis-(hydroxyaryl)-alkane, a bis-(hydroxyaryl)-cyclo-alkane, a dihydroxy-diaryl ether, a dihydroxy diaryl sulfide, a dihydroxy diaryl sulfoxide or a dihydroxy diaryl sulfone.

6. A resin according to any one of claims 1 to 5, wherein the terephthalic acid residue is derived from terephthaloyl chloride, methyl terephthaloyl chloride or 2,5-dimethyl terephthaloyl chloride, and wherein said isophthalic acid residue is derived from isophthalic chloride or 2-methyl-isophthaloyl chloride.

7. A resin according to any one of claims 1 to 6, wherein said resin has a terminal carboxyl group content of not more than 10 μ equivalents/g of resin.

8. A method of preparing an aromatic polyester-polycarbonate resin, comprising:

polycondensing a combination of a terephthaloyl chloride compound and an isphthaloyl chloride compound with a dihydroxy diaryl compound and phosgene in an aqueous alkaline reaction medium; and

separating the product polyester polycarbonate resin from said reaction medium.

9. A method according to claim 8, wherein said polycondensation step is accomplished by interfacial polymerization or solution polymerization.

**Patentansprüche**

1. Aromatisches Polyester-Polycarbonat-Harz, dessen Einfriertemperatur im Bereich von 160 bis 190°C liegt und das Reste einer Dihydroxydiarylverbindung, der Isophthalsäure und der Terephthalsäure und Carbonat enthält, dadurch gekennzeichnet, daß es ein Polymermaterial enthält, das aus wiederkehrenden Einheiten jeder der Strukturformeln I, II und III zusammengesetzt ist

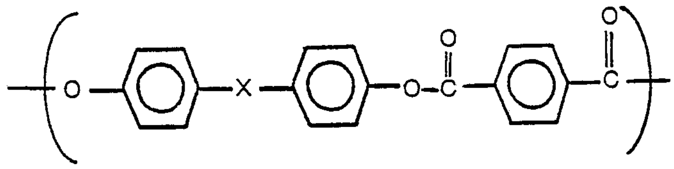

I

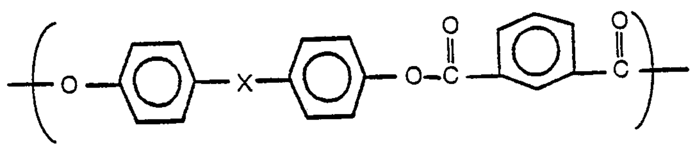

II

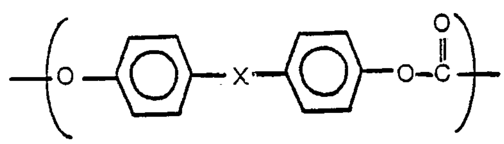

III

in denen eine zweiwertige Gruppe ist und jede zweiwertige aromatische Grupierung mit einem Kohlenwasserstoffrest substituiert sein kann, wobei das Molverhältnis von Dihydroxydiarylrest zu Benzoldicarbonsäurerest zu Carbonatgruppierung im Bereich von 1:0,33 bis 0,75:0,67 bis 0,25 liegt und das Molverhältnis Terephthalsäurerest zu Isophthalsäurerest in dem Benzoldicarbonsäurerest im Bereich von 9:1 bis 1:4 liegt.

2. Harz nach Anspruch 1, dadurch gekennzeichnet, daß das genannte Molverhaltnis im Bereich von 1:0,33 bis 0,49:0,67 bis 0,51 liegt.

3. Harz nach Anspruch 1 oder 2, dadurch gekennzeichnet, daß das genannte Molverhältnis in Bereich von 4:1 bis 3:7 liegt.

4. Harz nach einem der Ansprüche 1 bis 3, dadurch gekennzeichnet, daß es eine Grenzviskosität von 0,4 bis 1,5 bei 20°C hat.

5. Harz nach einem der Ansprüche 1 bis 4, dadurch gekennzeichnet, daß Dihydroxydiarylrest abgeleitet ist von einem Bis-(hydroxyaryl)-alkan, einem Bis-(hydroxyaryl)-cycloalkan, einem Dihydroxydiarylether, einem Dihydroxydiarylsulfid, einem Dihydroxydiarylsulfoxid oder einem Dihydroxydiarylsulfon.

6. Harz nach einem der Ansprüche 1 bis 5, dadurch gekennzeichnet, daß der Terephthalsäurerest abgeleitet ist von Terephthaloylchlorid, Methylterephthaloylchlorid oder 2,5-Dimethylterephthaloylchlorid und der Isophthalsäurerest abgeleitet ist von Isophthalsäurechlorid oder 2-Methylisophthaloylchlorid.

7. Harz nach einem der Ansprüche 1 bis 6, dadurch gekennzeichnet, daß das Harz endständige Carboxylgruppen in einer Menge von nicht mehr als 10 Mikroäquivalenten pro g Harz enthält.

8. Verfahren zum Erzeugen eines aromatischen Polyester-Polycarbonat-Harzes, in dem

eine Kombination einer Terephthaloylchloridverbindung und einer Isophthaloylchloridverbindung mit einer Dihydroxydiarylverbindung und Phosgen in einem wäßrigen alkalischen Reaktionsmedium einer Polykondensation unterworfen und

das als Produkt erhaltene Polyester-Polycarbonat-Harz von dem Reaktionsmedium abgetrennt wird.

9. Verfahren nach Anspruch 8, dadurch gekennzeichnet, daß die Polykondensation durch Grenzflächenpolymerisation oder Lösungspolymerisation bewirkt wird.

**Revendications**

1. Résine polyester-polycarbonate aromatique ayant un point de transition vitreuse dans la gamme de 160 à 190°C contenant des résidus de composé dihydroxy-diaryle, d'acide isophtalique, d'acide téréphtalique et de carbonate, caractérisée en ce qu'elle comprend: une matière polymère composée d'unités répétées représentées par chacune des structures I, II et III ci-après:

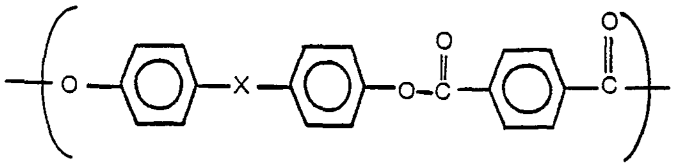

I

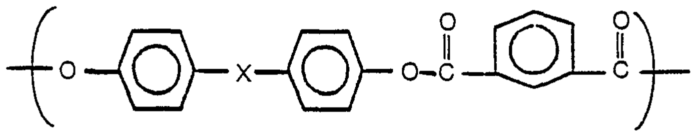

II

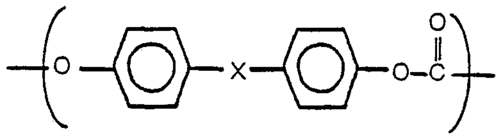

III

dans lesquelles X est un groupe divalent et chaque entité aromatique divalente peut être substituée par un résidu hydrocarboné et dans laquelle la proportion molaire de résidu dihydroxy-diaryle à résidu d'acide benzène dicarboxylique à partie carbonate est dans la gamme de 1:0,33 à 0,75:0,67 à 0,25 et le rapport molaire de résidu d'acide téréphtalique à résidu d'acide isophtalique dans le résidu d'acide benzène dicarboxylique est dans la gamme de 9:1 à 1:4.

2. Résine suivant la revendication 1, caractérisée en ce que la proportion molaire est dans la gamme de 1:0,33 à 0,49:0,67 à 0,51.

3. Résine suivant l'une quelconque des revendications 1 et 2, caractérisée en ce que le rapport molaire est dans la gamme de 4:1 à 3:7.

4. Résine suivant l'une quelconque des revendications 1 à 3, caractérisée en ce qu'elle a une viscosité intrinsèque dans la gamme de 0,4 à 1,5 à 20°C.

5. Résine suivant l'une quelconque des revendications 1 à 4, caractérisée en ce que la résidu dihydroxy-diaryle est dérivé d'un bis-(hydroxyaryl)-alcane, d'un bis-(hydroxyaryl)-cyclo-alcane, d'un éther dihydroxy-diarylique, d'un sulfure de dihydroxy-diaryle, d'un dihydroxy-diaryl-sulfoxyde ou d'une dihydroxy-diaryl-sulfone.

6. Résine suivant l'une quelconque des revendications 1 à 5, caractérisée en ce que le résidu d'acide téréphtalique est dérivé du chlorure de téréphtaloyle, du chlorure de méthyl-téréphtaloyle ou du chlorure de 2,5-diméthyl-téréphtaloyle, et que le résidu d'acide isophtalique est dérivé du chlorure isophtalique ou du chlorure de 2-méthyl-isophtaloyle.

7. Résine suivant l'une quelconque des revendications 1 à 6, caractérisée en ce que la résine a une teneur en groupe carboxyle terminal ne dépassant pas 10 μ équivalents/g de résine.

8. Procédé de préparation d'une résine polyester-polycarbonate aromatique, caractérisé en ce qu'il comprend:

la polycondensation d'une combinaison d'un composé de chlorure de téréphtaloyle et d'un composé de chlorure d'isophtaloyle avec un composé dihydroxy-diaryle et du phosgène dans un milieu de réaction alcalin aqueux; et

la séparation de la résine polyester-polycarbonate produite du milieu de réaction.

9. Procédé suivant la revendication 8, caractérisé en ce que cette étape de polycondensation est accomplie par polymérisation interfaciale ou polymérisation en solution.